# EUROPÄISCHE PATENTSCHRIFT

(11) **EP 1 262 872 B1**
(45) Veröffentlichungstag und Bekanntmachung des Hinweises auf die Patenterteilung: **19.08.2009**
(21) Anmeldenummer: 02009686.3
(22) Anmeldetag: 29.04.2002
(51) Int. Cl.: G06F 11/20, G06F 11/16

(54) **Master-CPU und Reserve-CPU Synchronisationsschnittstelle**
Master-CPU and Reserve-CPU synchronisation interface
Interface de synchronisation d'un Maitre-CPU et d'une Réserve-CPU

(30) Priorität: 10.05.2001 DE 10122693
(43) Veröffentlichungstag der Anmeldung: 04.12.2002
(73) Patentinhaber: SIEMENS AKTIENGESELLSCHAFT, 80333 München (DE)
(72) Erfinder: Barthel, Herbert, 91074 Herzogenaurach (DE); Metzler, Matthias, 76229 Karlsruhe (DE)

(56) Entgegenhaltungen:
- EP-A2- 0 747 833
- WO-A-01/20465
- US-A- 4 823 256
- US-A- 6 055 362

## Beschreibung

### Technisches Gebiet

Die Erfindung betrifft eine redundant aufgebaute Prozessoreinheit für ein Rechensystem mit einer Master-CPU und einer Reserve-CPU, von denen jede zwei aus einzelnen Funktionseinheiten bestehende Synchronisations-Schnittstellen aufweist. Ferner ist jede Synchronisations-Schnittstelle der Master-CPU mit einer Synchronisations-Schnittstelle der Reserve-CPU verbunden, d. h. die zwei CPUs sind mit einer sogenannten Punkt-zu-Punkt-Kopplung miteinander verbunden. Die Erfindung betrifft außerdem ein Verfahren zum Betreiben einer derartigen redundanten Prozessoreinheit.

Die beiden CPU-Einheiten sind oftmals in getrennten Einheiten vorhanden, die einen Abstand von wenigen Zentimetern bis mehrere hundert Meter oder Kilometer zueinander aufweisen können.

Redundant aufgebaute Prozessoreinheiten der zuvor genannten Art bezeichnet man auch als hochverfügbare Systeme, da jede ausgefallene CPU ohne Störung des kontinuierlichen Betriebs ausgetauscht werden kann. Der Austausch einer ausgefallenen CPU ist in einem derartigen hochverfügbaren System dadurch realisierbar, dass alle Aktualdaten von der aktiven Master-CPU auf die reparierte CPU kopiert und im laufenden Betrieb synchronisiert werden. Das Kopieren der Aktualdaten von der aktiven CPU auf die reparierte CPU wird auch als Aufdatenvorgang bezeichnet, wie es an sich bekannt ist. Das Synchronisieren im laufenden Betrieb der aktiven CPU und der reparierten CPU ist ebenfalls an sich bekannt.

### Stand der Technik

Dieses Aufdaten und auch die Synchronisierung erfolgt über eine Kommunikationseinrichtung mit entsprechender Schnittstelle (auch Synchronisations-Schnittstelle bezeichnet) auf jeder CPU und einer Verbindung der beiden CPUs über diese Schnittstellen. Somit sind bei ganz einfachen hochverfügbaren Systemen die zwei CPUs über ein Synchronisations-Modul pro CPU und einer einzigen Verbindung dieser beiden Synchronisations-Module miteinander verbunden.

Dieser Aufbau ist mit dem Problem behaftet, dass der Ausfall einer CPU nicht vom Ausfall der Schnittstellenverbindung bzw. Teilen davon unterschieden werden kann. Beim Ausfall der CPU muss die Partner-CPU die Prozessführung übernehmen. Beim Ausfall der Sync-Modulverbindung bzw. Teilen davon muss die Reserve-CPU in Stop gehen, um eine so genannte Doppelmasterschaft zu vermeiden. Eine Fehlentscheidung würde den Gesamtausfall des hochverfügbaren Systems verursachen, was unbedingt vermieden werden muss. Über eine andere Schnittstellenverbindung muss dieser Konflikt schnell aufgelöst werden.

Bei einem Ausfall der Kommunikationseinrichtung bzw. Teilen davon kann nicht oder nur mit erheblichem Aufwand im laufenden Betrieb zweifelsfrei erkannt werden, ob die Verbindung defekt ist oder welche Schnittstelle, d. h. welche Seite der Kommunikationsverbindung defekt ist. Es muss innerhalb sehr kurzer Zeit automatisch entschieden werden, welche CPU in Stop gehen soll, da ein Weiterbetrieb bei CPUs zu gefährlichen Zuständen führen kann. Führt nun die CPU den Prozess weiter, deren Schnittstelle defekt ist, kann nicht mehr aufgedatet werden und es ist kein redundanter Betrieb mehr möglich. Insbesondere muss das Sync-Modul, das im Master steckt, ohne Prozessunterbrechung austauschbar sein.

Zur Vermeidung dieser Problematik wurden bisher zwei steckbare Sync-Module pro CPU vorgesehen, die jeweils mit einem Sync-Modul der anderen CPU verbunden sind, um eine sogenannte Punkt-zu-Punkt-Verbindung zwischen den jeweiligen steckbaren Sync-Modulen der CPUs zu schaffen. Jede dieser vier steckbaren Sync-Module musste im laufenden Betrieb austauschbar sein. Sind die Sync-Verbindungen unterschiedlich, so diente die eine Sync-Verbindung zum Aufdaten und die andere Sync-Verbindung zur Unterscheidung der Fehlerfälle.

Bei diesem CPU-Aufbau sind die einzelnen Prozessoren einer CPU und die Synchronisations-Verbindung sowie die entsprechenden zugehörigen Funktionseinheiten über Steckverbindungen etc. austauschbar gestaltet, was zu hohen Kosten, geringer Verfügbarkeit und hohen Zugriffzeiten auf das Sync-Modul und damit hohen Laufzeiten aufgrund der Stecker und der zugehörigen Logik führt.

Die EP 0 747 833 A2 offenbart eine redundante Prozessoreinheit, zur Erhöhung ihrer Verfügbarkeit weist diese eine selbsttestende Fehlererkennung auf, welche zwei Signale, die durch die redundanten Prozessoren erzeugt wurden auf Gleichheit testet.

### Darstellung der Erfindung

Das der Erfindung zugrundeliegende technische Problem besteht darin, eine verbesserte redundante Prozessoreinheit bereit zu stellen, die mit geringeren Kosten zu fertigen ist und zugleich eine höhere Verfügbarkeit aufweist.

Dieses technische Problem wird durch eine redundante Prozessoreinheit gelöst, die eine Master-CPU und eine Reserve-CPU aufweist. Jede CPU weist zwei aus einzelnen Funktionseinheiten bestehende Synchronisations-Schnittstellen auf, wobei jede Synchronisations-Schnittstelle der Master-CPU mit einer Synchronisations-Schnittstelle der Reserve-CPU verbunden ist. Erfindungsgemäß sind die einer CPU zugeordneten Synchronisations-Schnittstellen in dieser CPU fest integriert, d.h es ist keine steck- und ziehbare Sync-HW-Funktion vorhanden. Deshalb ist im folgenden nicht von einem Sync-Modul sondern von einer Sync-Schnittstelle die Rede.

Der Erfindung liegt der Gedanke zugrunde, erstmals die Funktionseinheiten einer Synchronisations-Schnittstelle fest in der CPU zu integrieren, wodurch die einzelnen Steckverbindungen etc. wegfallen, was eine höhere Verfügbarkeit der Einzel-CPUs inklusive deren Schnittstellen-Kopplungen erlaubt und auch deutlichere Kostenreduktion mit sich bringt, da weniger Bauteile verbaut werden müssen. Zugleich wird ein kompakterer Aufbau erzielt, insbesondere weil auch die zugehörige Steckverbinder und Logik, die für eine Wechselbarkeit im Betrieb unter Spannung, die sogenannte Z&S-Logik, nicht mehr notwendig ist.

Durch diesen integrierten Aufbau der Synchronisations-Schnittstellen ist es auch erstmals möglich, bestimmte Funktionseinheiten zweier Synchronisations-Schnittstellen für eine CPU zusammen zu fassen, wodurch weitere Bauteileinsparungen möglich sind. Insbesondere kann so gewährleistet werden, dass immer eine Schnittstelle funktionsfähig bleibt, über die eine Master-CPU eine Verbindung zur Reserve-CPU halten kann, was im Fehlerfall zu einer definierten Reaktion führt und ermöglicht, dass auch eine funktionsfähige Verbindung zur Reserve-CPU aufgebaut werden kann, was ein spezielles Aufdatenverfahren ermöglicht.

Durch den integrierten Aufbau ist es auch zusätzlich möglich, verschiedene Aufteilungen der Funktionseinheiten-Bauelementen im Hinblick auf die Verfügbarkeit und die Kosten in passender Weise vorzunehmen, was insbesondere bei der Testbarkeit der Schnittstellen entscheidend ist. Dieser Ansatz beruht auf der Annahme, dass ein auftretender Fehler innerhalb einer begrenzten Zeit, beispielsweise einige 10 ms, durch gezielte Online-Tests lokalisiert werden kann und daraufhin definiert reagiert werden kann, beispielsweise durch eine Master-Reserve-Umschaltung oder eine Reserve-Stop-Fehlersuchbetrieb-Umschaltung.

Die Kommunikation des einen Prozessors oder der mehreren Prozessoren in einer CPU auf die vorhandenen Schnittstellen erfolgt über einen oder auch mehrere interne Busse. So umfassen die jeweiligen Synchronisations-Schnittstellen unter anderem folgende Funktionseinheiten: Bus-Interface, beispielsweise ein PCI, Lokalbus, etc., ein Kommunikations-Synchronisations-Controller, eine Coding-Decoding-Einheit, eine SERDES-Einheit, eine PHY-Einheit, die auch Clock/Data-Recovery genannt wird, inklusive einer LoopBack-Funktion, ein Transceiver, eine RAM-Einheit.

Im Falle einer vollmodularen Synchronisations-Schnittstelle kommt am Bus-Interface auf der CPU-Seite und der Synchronisations-Modulseite noch die Logik für das Ziehen und Stecken unter Spannung im Betrieb, das sogenannte Hot Swap für Busund Stromversorgung, etc. hinzu.

Erfindungsgemäß ist eine möglichst hohe Integration anzustreben, wobei der Transceiver - die Umsetzung auf Kupfer- oder Glasfaserleitung - nicht mit in die Betrachtung einbezogen ist, aber unter Umständen einbezogen werden kann.

So ist es beispielsweise möglich, das Bus-Interface, die Kommunikations-Synchronisations-Controller-Einheit und den RAM zu integrieren, und gleichzeitig die Decoding, SERDES und PHY-Einheit in einem Bauelement zusammenzufassen. Alternativ hierzu ist es möglich, das Bus-Interface und den Kommunikations-Synchronisations-Controller zusammenzufassen und den RAM extra zu belassen. Es ist aber auch möglich den RAM in die Baugruppe Bus-Interface, Kommunikations-Synchronisations-Controller, Coding/Decoding-Einheit mit einzubeziehen. Selbstverständlich ist es auch möglich, alle die vorgenannten Einheiten auf einem Bauelement zusammenzufassen. Es sollten aber immer nach außen hin zwei gleichartige Schnittstellen verwendet werden.

Vorzugsweise sollte die Schnittstelle eine Testunterstützung für die genannten Online-Tests mitbringen, das wird im Wesentlichen durch die z.B. in eine PHY-Einheit integrierte LoopBack-Funktion gewährleistet, die es erlaubt, bis auf die Transceiver-seitigen Teile des PHY (hier die LoopBack-Funktion) und des Transceivers alle Komponenten bzw. Funktionseinheiten der Synchronisations-Schnittstelle mit hoher Güte zu testen. Im übrigen müssen auch das Bus-Interface, der Speicher etc. getestet werden.

Dabei ist es insbesondere vorteilhaft, die online in kurzer Zeit mit einer Fehleraufdeckungsrate von ca. 99% testbaren Komponenten nicht redundant auszuführen die dann nur einmal für zwei Synchronisations-Schnittstellen in einer CPU vorgesehen werden müssten. Anders ausgedrückt: alle so nicht testbaren Komponenten, d. h. mindestens die z.B. in der PHY-Einheit integrierte LoopBack-Funktion und der Transceiver, müssen diskret redundant ausgeführt werden.

Damit wird ein Optimum erreicht, wenn nur die PHY-Einheiten bzw. LoopBack-Funktionen und die Transceiver der Synchronisations-Schnittstellen einer CPU redundant ausgebildet werden, und die Bus-Interface-Einheit, die Kommunikations-Synchronisations-Controller-Einheit, die Coding/Decoding-Einheit, die SERDES-Einheit und der RAM für beide Synchronisations-Schnittstellen einer CPU nur einmal vorgesehen sind und in einer Einheit integriert werden.

Kann zum Beispiel in der geforderten Zeit nur der Speicher nicht vollständig getestet werden, so reicht es aus, zusätzlich zur PHY-Einheit und der Transceiver-Einheit auch nur diesen redundant vorzusehen.

Insgesamt ist es somit möglich bis hin zum fast vollständigen redundanten Aufbau sehr fein die Verfügbarkeit gegen die Kosten zu skalieren.

Der Aufbau einer redundanten Prozessoreinheit gemäß den vorgenannten Merkmalen lässt die Durchführung einer speziellen Überprüfungsverfahrensweise zu.

Bei dem erfindungsgemäßen Verfahren zum Betreiben einer redundanten Prozessoreinheit mit den Merkmalen der vorgenannten Art wird von der Master- und der Reserve-CPU zyklisch überprüft, ob eine der beiden Schnittstellenverbindungen ausgefallen ist. Es sei hier angemerkt, dass unter einer Schnittstellenverbindung insbesondere eine Sync-Einheit (Sync-Schnittstelle) in der Master-CPU 4 bzw. 5, die entsprechende Sync-Einheit in der Reserve-CPU 6 bzw. 7 und die Verbindung 8 bzw. 9 zwischen diesen umfasst. Wenn ein Ausfall einer der beiden Schnittstellenverbindungen festgestellt wird, wird für eine bestimmte Zeitspanne die andere Schnittstellenverbindung überprüft. Diese Tests umfassen auch einen entsprechenden Test der Sync-Schnittstelle über die LoopBack-Funktion, wie schon zuvor beschrieben. Wenn kein Ausfall der anderen Verbindung festgestellt wird, dann geht vorzugsweise die Reserve-CPU in Stop und die Master-CPU behält weiterhin die Prozessführung. Die Reserve-CPU wird nun Offline geprüft. Bei einem Defekt wird die CPU repariert und wieder aufgedatet. Das System ist nun wieder im normalen redundanten Betrieb.

Werden jedoch beide Sync-Schnittstellen der Reserve-CPU als intakt geprüft, wird die CPU wieder aufgedatet, übernimmt als neuer Master die Prozessführung, und die ehemalige Master-CPU geht in Stop, um Offline geprüft zu werden. Bei einem Defekt wird diese CPU repariert und wieder aufgedatet. Das System ist nun wieder im normalen redundanten Betrieb.

Werden beide Sync-Schnittstellen der ehemaligen Master-CPU als intakt geprüft, wird vorzugsweise die CPU repariert, deren Sendereinheit (Bestandteil des Tranceivers) im Pfad der als defekt diagnostizierten Schnittstellenverbindung liegt. Dazu wird gegebenenfalls aufgedatet und umgeschaltet, wie es an sich bekannt ist. Das ist sinnvoll, da die Sendeeinheit eine weitaus höhere Ausfallwahrscheinlichkeit hat als die korrespondierende Empfängereinheit des Tranceivers.

Bei einem Ausfall beider Schnittstellenverbindungen übernimmt bzw. behält diejenige CPU als Master die Prozessführung, die keinen Fehler innerhalb ihrer Online testbaren Einheiten (Interface; Controller etc.) ihrer Sync-Schnittstellen feststellen konnte. Die andere CPU geht in Stop.

Wenn ein Ausfall auf der anderen Schnittstellenverbindung festgestellt wird, dann geht die Master-CPU in Stop und die Reserve-CPU übernimmt als neuer Master die Prozessführung.

Vorzugsweise wird für den Fall, dass ein Ausfall einer der beiden Schnittstellenverbindungen festgestellt wird, die Reserve-CPU Offline geprüft.

Falls ein Ausfall auf der anderen Schnittstellenverbindung festgestellt wird, wird vorzugsweise die ehemalige Master-CPU Offline geprüft.

Die Offline-geprüfte und gegebenenfalls reparierten CPUs werden wieder aufgedatet.

Vorzugsweise wird der redundante Betrieb über eine intakte Schnittstellenverbindung zur Erhöhung der Verfügbarkeit zunächst (bis zur Offline-Prüfung/Reparatur) aufrecht erhalten.

Vorzugsweise werden beim Aufdaten beide Schnittstellenverbindungen geprüft. Wenn beide Schnittstellenverbindungen intakt sind, kann die Master-CPU die beiden Verbindungen zur Erhöhung der Performance beim Aufdaten der Reserve-CPU nutzen. Es ist selbstverständlich aber auch möglich, nur eine der beiden bzw. die eine intakte Schnittstellenverbindung zu nutzen.

Dies wird durch den Vorrichtungsanspruch 1 sowie den Verfahrens anspruch 9 erreicht, wobei die abhängigen Ansprüche 2-8 und 10-14 zweckmäßige Ausgestaltungen des Gegenstandes deren respektiven Haupanspruchs spezifizieren.

### Kurze Beschreibung der Zeichnungen

Im folgenden sind zur weiteren Erläuterung und zum besseren Verständnis mehrere Ausführungsbeispiele der Erfindung unter Bezugnahme auf die beigefügten Zeichnungen näher beschrieben.

Es zeigen:
- Fig. 1: eine erfindungsgemäße Prozessoreinheit mit einer Master-CPU und einer Reserve-CPU, die jeweils zwei fest integrierte Synchronisations-Schnittstellen umfassen,
- Fig. 2: eine schematisierte Darstellung einer CPU für eine erfindungsgemäße Prozessoreinheit mit beispielhaft zwei Prozessoren,
- Fig. 3: eine schematisiert dargestellte CPU für eine erfindungsgemäße Prozessoreinheit, bei der bestimmte Funktionseinheiten der zwei Synchronisations-Schnittstellen für beide Synchronisations-Schnittstellen zusammengefasst sind,
- Fig. 4: eine weitere schematisierte Darstellung zweier Synchronisations-Schnittstellen für eine weitere Ausführungsform einer erfindungsgemäßen Prozessoreinheit, bei der andere bestimmte Funktionseinheiten der beiden Synchronisations-Schnittstellen auf einem Bauteil zusammengefasst sind,
- Fig. 5: eine weitere schematisierte Darstellung zweier Synchronisations-Schnittstellen für eine weitere Ausführungsform einer erfindungsgemäßen Prozessoreinheit, bei der andere bestimmte Funktionseinheiten der beiden Synchronisations-Schnittstellen auf einem Bauteil zusammengefasst sind,
- Fig. 6: eine schematisierte Darstellung zweier Synchronisations-Schnittstellen für eine weitere Ausführungsform einer erfindungsgemäßen Prozessoreinheit, bei der andere bestimmte Funktionseinheiten der beiden Synchronisations-Schnittstellen auf einem Bauteil zusammengefasst sind,
- Fig. 7: eine schematisierte Darstellung einer PHY-Einheit mit LoopBack-Ausgestaltung,
- Fig. 8: eine schematisierte Darstellung einer Synchronisations-Schnittstelle für eine erfindungsgemäße Prozessoreinheit, bei der bestimmte Funktionseinheiten jeweils in einer Baugruppe zusammengefasst sind,
- Fig. 9: eine schematisierte Darstellung einer Synchronisations-Schnittstelle für eine erfindungsgemäße Prozessoreinheit, bei der bestimmte Funktionseinheiten jeweils in einer Baugruppe zusammengefasst sind,
- Fig. 10: eine schematisierte Darstellung einer Synchronisations-Schnittstelle für eine erfindungsgemäße Prozessoreinheit, bei der bestimmte Funktionseinheiten jeweils in einer Baugruppe zusammengefasst sind,
- Fig. 11: eine schematisierte Darstellung einer Synchronisations-Schnittstelle für eine erfindungsgemäße Prozessoreinheit, bei der bestimmte Funktionseinheiten jeweils in einer Baugruppe zusammengefasst sind,
- Fig. 12: eine schematisierte Darstellung einer CPU für eine redundante Prozessoreinheit nach dem Stand der Technik.

### Beschreibung von bevorzugten Ausführungsbeispielen der Erfindung

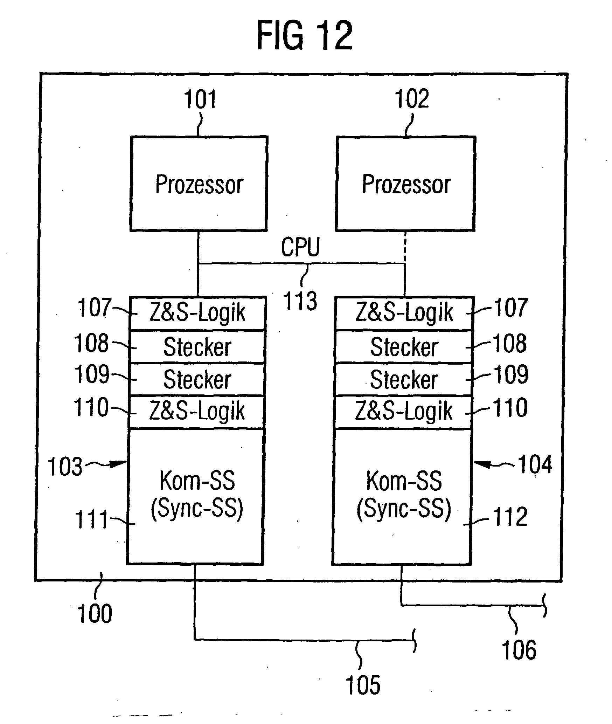

Eingangs wird unter Bezugnahme auf die Fig. 12 eine redundante Prozessoreinheit nach dem Stand der Technik erläutert. Die bekannte redundante Prozessoreinheit besteht aus zwei CPUs, wovon in der Fig. 12 nur eine gezeigt ist, nämlich die Master-CPU 100. Diese Master-CPU 100 umfasst zwei Prozessoren 101, 102 und zwei Kommunikations- bzw. Synchronisations-Schnittstellen 103, 104. Diese Synchronisations-Schnittstellen 103, 104 sind mit jeweils einer Synchronisations-Schnittstelle der Reserve-CPU, hier nicht gezeigt, über jeweilige Schnittstellen-Verbindungen 105, 106 verbunden.

Die einzelnen Prozessoren 101, 102 sind mit jeder Synchronisations-Schnittstelle 103, 104 über Leitungen 113 verdrahtet, so dass jeder Prozessor 101, 102 über jede Synchronisations-Schnittstelle 103, 104 mit der anderen CPU kommunizieren kann.

Die hier dargestellten Synchronisations-Schnittstellen 103, 104 umfassen jeweils eine prozessorseitige Z&S-Logik 107 mit Steckverbindung 108. Schnittstellenseitig umfasst jede Synchronisations-Schnittstelle 103 wiederum eine Z&S-Logik 110 mit Steckverbindung 109 und weiteren bekannten Funktionseinheiten. Die Steckverbindungen 108, 109 erlauben ein einfaches Austauschen der Synchronisations-Schnittstellen.

Wie bereits in der Beschreibungseinleitung zum Stand der Technik erwähnt, können die Schnittstellen-Verbindungen 105, 106 gleichartig oder unterschiedlich ausgestaltet sein. Bei unterschiedlicher Schnittstellenverbindung dient die eine zum Aufdaten, die andere zur Unterscheidung der Fehlerfälle. Die Z&S-Logiken 107, 110 erlauben die Wechselbarkeit im Betrieb unter Spannung.

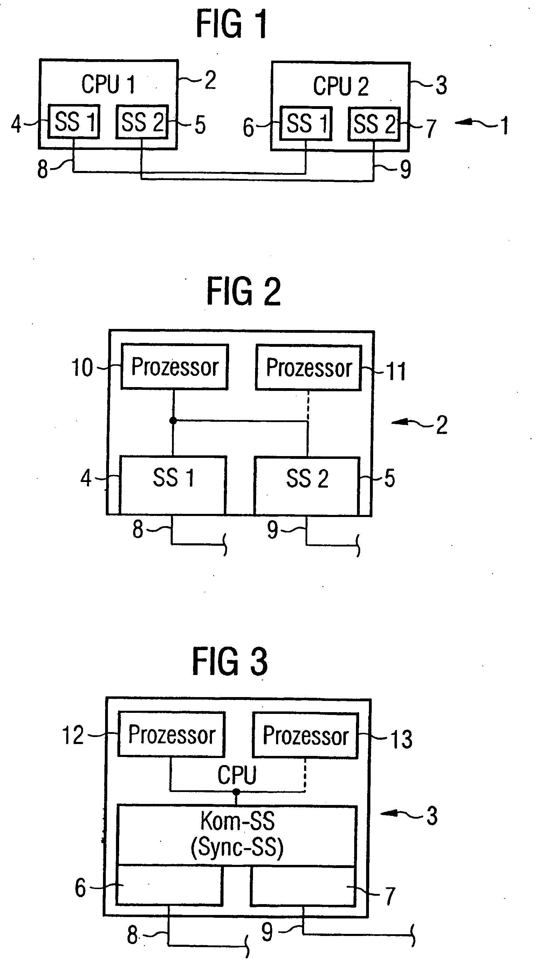

Anhand der Fig. 1 - 3 wird eine schematisierte Übersicht über erfindungsgemäße redundante Prozessor-Einheiten 1 gegeben. Eine erfindungsgemäße redundante Prozessor-Einheit 1 umfasst eine Master-CPU 2 und eine Reserve-CPU 3. Die Master-CPU 2 enthält zwei Synchronisations-Schnittstellen 4, 5, die in der Master-CPU 2 fest integriert sind. In entsprechender Weise ist die Reserve-CPU 3 aufgebaut. Diese umfasst hierin fest integrierte Synchronisations-Schnittstellen 6 und 7. Die Synchronisations-Schnittstelle 4 der Master-CPU 2 ist über eine Schnittstellen-Verbindung 8 mit der Synchronisations-Schnittstelle 6 der Reserve-CPU 3 verbunden. Die weitere Synchronisations-Schnittstelle 5 der Master-CPU 2 ist über eine Schnittstellen-Verbindung 9 mit der zweiten Synchronisations-Schnittstelle 7 der Reserve-CPU 3 verbunden. Kennzeichnend ist hier also, dass jeweils eine CPU 2, 3 mit zwei Synchronisations-Schnittstellen 4, 5 bzw. 6, 7 ausgestattet ist, wovon jeweils eine Synchronisations-Schnittstelle mit einer der anderen CPU verbunden ist. Die Synchronisations-Schnittstellen 4, 5 bzw. 6, 7 der CPUs 2, 3 sind jeweils in der zugehörigen CPU 2, 3 fest integriert, was die bereits eingangs erwähnten Vorteile bringt.

Aus der Fig. 2 ist eine detailliertere Darstellung einer Master-CPU 2 ersichtlich. Wie hierin dargestellt ist, umfasst die Master-CPU 2 z.B zwei Prozessoren 10, 11 die über Verdrahtungen 12 mit allen beiden Synchronisations-Schnittstellen 4, 5 verbunden sind. Die Reserve-CPU 3 ist in identischer Weise aufgebaut.

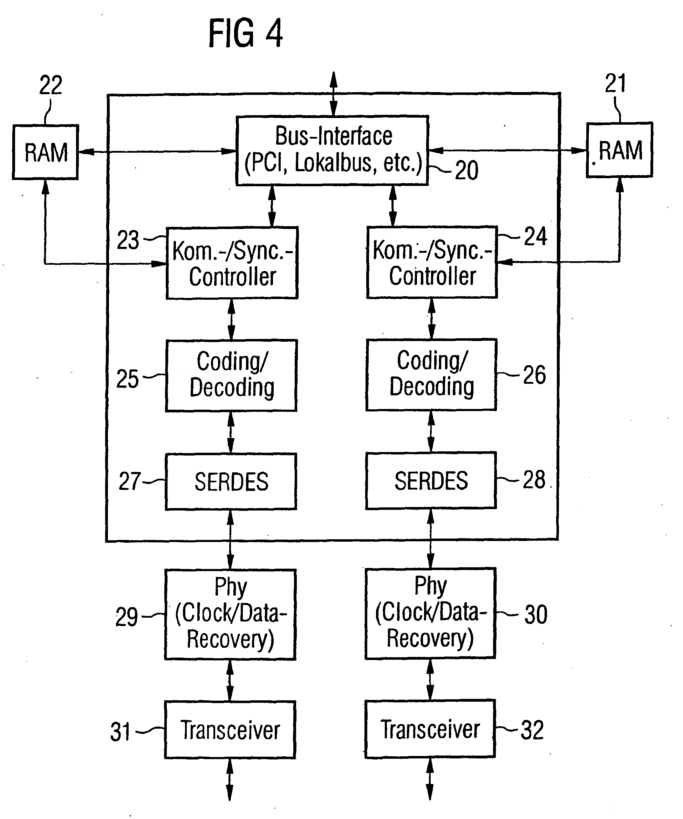

Aus der Fig. 3 ist ersichtlich, dass zur weiteren Einsparung von Bauteilen, hier anhand der Reserve-CPU 3 gezeigt, bestimmte Funktions-Einheiten der beiden Synchronisations-Schnittstellen 6, 7 für beide Schnittstellen zusammengefasst sind. Hierzu wird noch anhand der nachfolgenden Fig. 4 - 6 näher Stellung genommen.

Bei der Ausführungsform gemäß der Fig. 4 umfasst eine Synchronisations-Schnittstelle einer CPU eine Kommunikations-Synchronisations-Controller-Einheit 23, eine Coding-Decoding-Einheit 25, eine SERDES-Einheit 27, eine PHY-Einheit 29 und eine Transceiver-Einheit 31. Die andere Synchronisations-Schnittstelle umfasst ebenfalls eine Kommunikations-Synchronisations-Controller-Einheit 24, eine Coding-Decoding-Einheit 26, eine SERDES-Einheit 28, eine PHY-Einheit 30, eine Transceiver-Einheit 32. Die beiden Transceiver 31, 32 stehen über die jeweiligen Schnittstellen-Verbindungen 8, 9 mit den anderen Schnittstellen der anderen CPU in Verbindung. Beide Synchronisations-Schnittstellen greifen mit ihren Kommunikations-Synchronisations-Controllern 23, 24 auf eine gemeinsame Bus-Interface-Einheit 20 zu. Eine RAM-Einheit 22 ist für den Zugriff der Kommunikations-Synchronisations-Controller-Einheit 23, und das Bus-Interface 20 vorgesehen. Eine weitere RAM-Einheit 21 ist für den gemeinsamen Zugriff des Bus-Interface 20 und der Kommunikations-Synchronisations-Controller-Einheit 24 vorhanden.

Bei dieser Ausführungsform sind die Bus-Interface-Einheit 20, die beiden Kommunikations-Synchronisations-Controller-Einheiten 23, 24, die beiden Coding-Decoding-Einheiten 25, 26 und die beiden SERDES-Einheiten 27, 28 in einer Baugruppe aufgebracht.

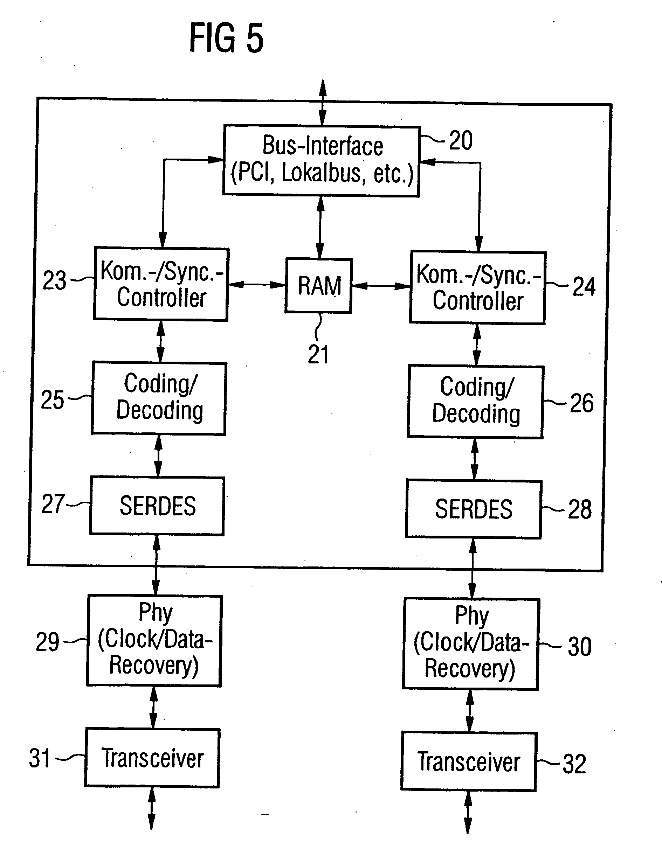

Im Gegensatz hierzu ist bei der Ausführungsform der Fig. 5 die RAM-Einheit 21 und die Bus-Interface-Einheit 20 für beide Synchronisations-Schnittstellen gemeinsam vorhanden, so dass beide Kommunikations-Synchronisations-Controller-Einheiten 23, 24 der beiden Synchronisations-Schnittstellen auf die beiden Einheiten 20, 21 zusammen zurückgreifen. Hier sind die Einheiten 20 - 28 in einer Baugruppe zusammengefasst.

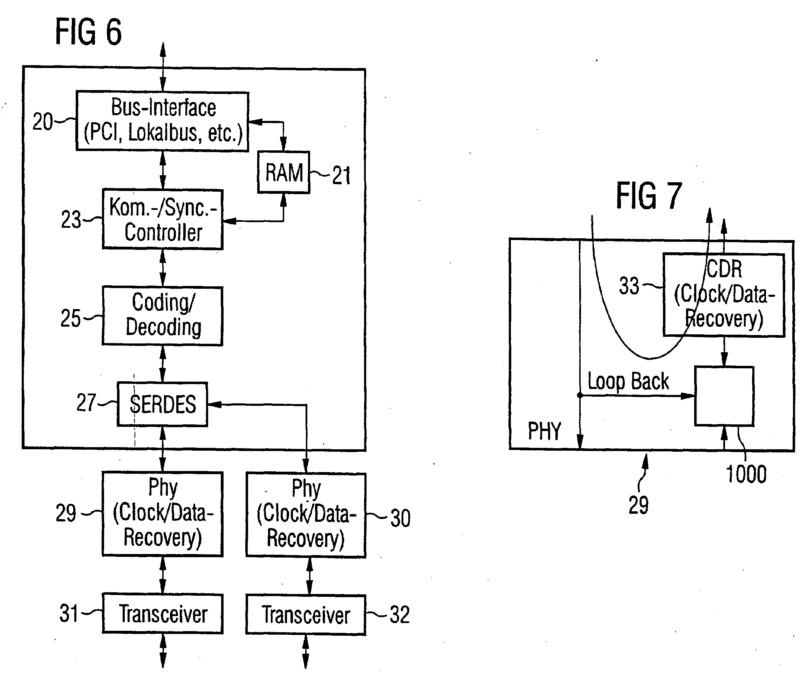

Eine weitere Optimierung ist in der Fig. 6 gezeigt. Hier sind für beide Synchronisations-Schnittstellen nur eine Bus-Interface-Einheit 20, eine Speicher-Einheit 21, eine Kommunikations-Synchronisations-Controller-Einheit 23, eine Coding-Decoding-Einheit 25 und eine SERDES-Einheit 27 vorhanden. Über die PHY-Einheiten 29, 30 und die zugehörigen Transceiver-Einheiten 31, 32 der beiden Synchronisations-Schnittstellen wird die Kommunikation mit der anderen CPU durchgeführt.

Diese Ausführungsform hat den Vorteil, dass größere Teile für beide Synchronisations-Schnittstellen nur einmal integriert werden müssen, wodurch sich beträchtliche Kosteneinsparungen ergeben können. Im übrigen ist auch die Verfügbarkeit immer noch sehr gut.

Hierzu ist es zweckdienlich, dass die PHY-Einheiten 29, wie in der Fig. 7 dargestellt, wie auch die entsprechende PHY-Einheit 30 der anderen Synchronisations-Schnittstelle eine integrierte LoopBack-Funktion gewährleitet, die es erlaubt, bis auf Teile der PHY-Einheiten und der Transceiver-Einheiten alle Funktions-Einheiten der Kommunikations-Schnittstellen mit hoher Güte zu testen. Dafür ist die Umschalteinheit 1000 in dargestellter Weise z.B. in der PHY-Einheit 29 vorhanden. Die LoopBack-Funktion in Form der Umschalteinheit kann aber auch getrennt von der CDR-Einheit 33 aufgebaut werden; sie muss nicht zwangsläufig wie beispielhaft gezeigt in die PHY-Einheit 29 integriert sein.

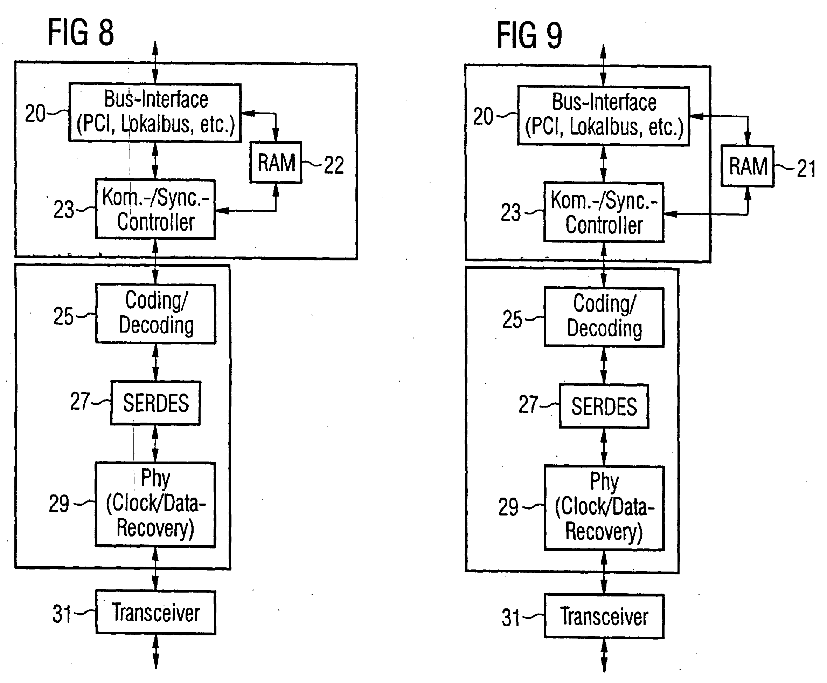

In den Fig. 8 - 11 sind weitere Ausführungsformen zur Gruppierung der einzelnen Funktionseinheiten 20 - 31 in einer Synchronisations-Schnittstelle 4, 5, 6, 7 einer Master-CPU 2 oder einer Reserve-CPU 3 dargestellt.

So ist in der Fig. 8 die Bus-Interface-Einheit 20, die Kommunikations-Synchronisations-Controller-Einheit 23 und die RAM-Einheit 22 in einer Baugruppe zusammengefasst. In einer weiteren Baugruppe sind die Coding-Decoding-Einheit 25, die SERDES-Einheit 27 und die PHY-Einheit 29 in einer Baugruppe zusammengefasst.

Im Gegensatz hierzu ist in der Ausführungsform gemäß der Fig. 9 die RAM-Einheit 21 separat ausgebildet und nicht in der Baugruppe integriert, wie in der Fig. 8 gezeigt.

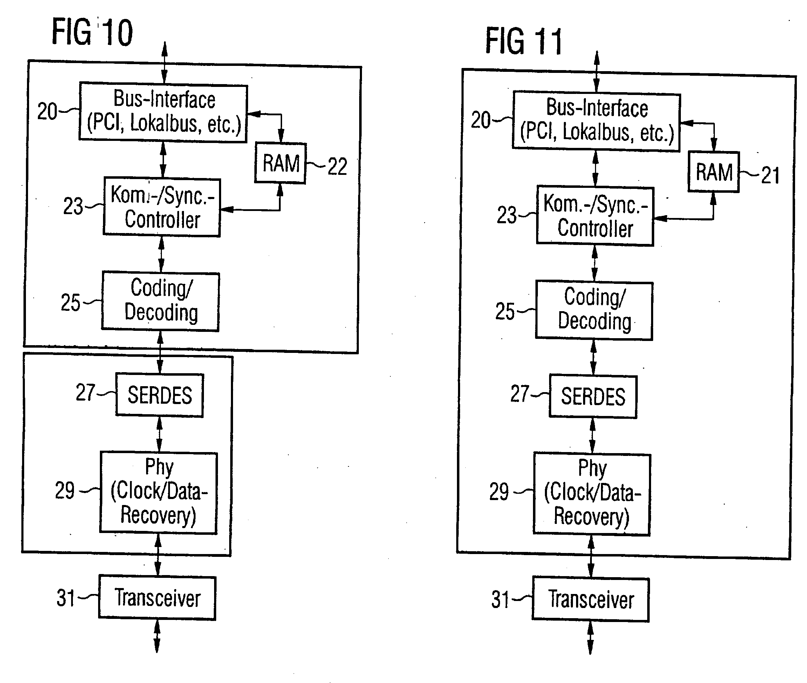

Bei der in der Fig. 10 gezeigten Ausführungsform einer Synchronisations-Schnittstelle für eine Master-CPU 2 oder eine Reserve-CPU 3 ist im Gegensatz zu der Fig. 8 die Coding-Decoding-Einheit 25 mit in die Baugruppe integriert, in der die RAM-Einheit 22 untergebracht ist.

Schließlich ist in der Fig. 11 eine weitere Ausführungsform gezeigt, bei der alle zuvor genannten Funktions-Einheiten 20 - 29 in einer Baugruppe integriert sind. Lediglich die Transceiver-Einheit 31 ist separat ausgebildet.

Eine redundante Prozessoreinheit 1 mit dem erfindungsgemäßen Aufbau wird vorzugsweise wie folgt betrieben.

Von der Master-CPU 2 und der Reserve-CPU 3 wird zyklisch überprüft, ob eine der beiden Schnittstellenverbindungen ausgefallen ist. Es sei hier angemerkt, dass eine Schnittstellenverbindung insbesondere eine Sync-Einheit (Sync-Schnittstelle) in der Master-CPU 4 bzw. 5, die entsprechende Sync-Einheit in der Reserve-CPU 6 bzw. 7 und die Verbindung 8 bzw. 9 zwischen diesen umfasst.

Wenn ein Ausfall einer der beiden Schnittstellenverbindungen festgestellt wird, wird für eine bestimmte Zeitspanne die andere Verbindung überprüft. Diese Tests umfassen auch einen entsprechenden Test der Sync-Schnittstelle über die LoopBack-Funktion, wie schon beschrieben.

Wenn kein Ausfall der anderen Verbindung festgestellt wird, dann geht vorzugsweise die Reserve-CPU 3 in Stop und die Master-CPU 2 behält weiterhin die Prozessführung. Die Reserve-CPU 3 wird nun Offline geprüft. Bei einem Defekt wird die CPU repariert und wieder aufgedatet. Das System ist nun wieder im normalen redundanten Betrieb. Werden jedoch beide Sync-Schnittstellen 6 und 7 des Reserve-CPU 3 als intakt gepüft, wird die CPU wieder aufgedatet, übernimmt als neuer Master die Prozessführung, und die ehemalige Master-CPU 2 geht in Stop, um Offline geprüft zu werden. Bei einem Defekt wird die CPU repariert und wieder aufgedatet. Das System ist nun wieder im normalen redundanten Betrieb.

Werden jedoch beide Sync-Schnittstellen 4 und 5 der ehemaligen Master-CPU 2 als intakt geprüft, wird vorzugsweise die CPU (2 oder 3) repariert, deren Sendeeinheit (Bestandteil des Transceivers 31 bzw. 32) im Pfad der als defekt diagnostizierten Schnittstellenverbindung liegt. Dazu wird gegebenenfalls aufgedatet und umgeschaltet, wie an sich bekannt. Das ist sinnvoll, da die Sendeeinheit eine weitaus höhere Ausfallwahrscheinlichkeit hat als die korrespondierende Empfängereinheit der Transceiver 31 bzw. 32.

Bei einem Ausfall beider Schnittstellenverbindungen übernimmt bzw. behält die CPU als Master die Prozessführung, die keinen Fehler innerhalb ihrer Online testbaren Einheiten (Interface 20; Controller 23, 24; etc.) ihrer Sync-Schnittstellen feststellen konnte. Die andere CPU geht in Stop.

Die Offline geprüften und gegebenenfalls reparierten CPU's 2, 3 werden wieder aufgedatet, wie es an sich bekannt ist.

Vorzugsweise wird der redundante Betrieb über eine intakte Schnittstellenverbindung zur Erhöhung der Verfügbarkeit zunächst (bis zur Offline-Prüfung/Reparatur) aufrecht erhalten.

Vorzugsweise werden beim Aufdaten beide Schnittstellenverbindungen geprüft. Wenn beide Schnittstellenverbindungen intakt sind, kann die Master-CPU die beiden Verbindungen zur Erhöhung der Performance beim Aufdaten der Reserve-CPU nutzen. Es ist selbstverständlich aber auch möglich, nur eine der beiden bzw. die eine intakte Schnittstellenverbindung zu nutzen.

Vor Beginn des Aufdatens werden beide Schnittstellenverbindungen überprüft. Stellt man fest, dass bei der Master-CPU beide Verbindungen defekt sind, so muss der Controller defekt sein. Dann geht die Master-CPU auf Stopp. Ist nur eine der beiden Verbindungen defekt, so wird zunächst der redundante Betrieb aufrecht erhalten und mit der Reserve-CPU ein Offline-Test durchgeführt. Wird ein Defekt festgestellt, so wird die Reserve-CPU repariert und es erfolgt wiederum ein Aufdaten-Vorgang. Wird kein Defekt ermittelt, so erfolgt der Aufdaten-Vorgang und ein Umschalten. Die frühere Master-CPU führt nun einen Offline-Test durch. Wird hier ein Defekt ermittelt, so erfolgt die Reparatur der früheren Master-CPU, nach der Reparatur erfolgt ein Aufdatenvorgang. Wird bei der früheren Master-CPU kein Defekt festgestellt, so muss der defekte "Sender" ausgewechselt werden. Dafür wird die Schnittstellenverbindung umgeschaltet. Wie bereits zuvor ausgeführt, kann ein zyklischer Test sowohl von der Reserve-CPU als auch der Master-CPU ausgeführt werden. Bei einem spontanen Defekt, wie beispielsweise einem Synchronisationsfehler, wird die defekte Sync-Schnittstelle getestet, und zwar sowohl für den Sender wie auch den Empfänger.

## Patentansprüche

1. Redundante Prozessoreinheit (1) für ein hochverfügbares Rechensystem mit einer Master-CPU (2) und einer Reserve-CPU (3), von denen jede (2, 3) zwei aus einzelnen Funktionseinheiten bestehende Synchronisations-Schnittstellen (4, 5, 6, 7) aufweist, wobei jede Synchronisations-Schnittstelle (4, 5) der Master-CPU (2) mit einer Synchronisations-Schnittstelle (6, 7) der Reserve-CPU (3) verbunden ist und die Synchronisations-Schnittstellen (4, 5, 6, 7) einer CPU (2, 3) in dieser CPU (2, 3) fest integriert sind, **dadurch gekennzeichnet, dass** eine Synchronisations-Schnittstelle (4, 5; 6, 7) eine Testunterstützung aufweist, die es erlaubt, die Funktionseinheiten der Synchronisations-Schnittstelle (4, 5, 6, 7) zu testen, wobei eine LoopBack-Funktion in Form einer Umschalteeinheit (1000) vorhanden ist.

2. Prozessoreinheit nach Anspruch 1, **dadurch gekennzeichnet, dass** jede CPU (2, 3) einen oder mehr Mikroprozessoren (10, 11; 12, 13) enthält, die mit allen Synchronisations-Schnittstellen (4, 5; 6, 7) dieser CPU (2, 3) verbunden sind.

3. Prozessoreinheit nach einem der voranstehenden Ansprüche, **dadurch gekennzeichnet , dass** die Synchronisations-Schnittstellen (4, 5; 6, 7) nach außen gleichartig sind.

4. Prozessoreinheit nach einem der voranstehenden Ansprüche, **dadurch gekennzeichnet, dass** die Funktionseinheiten einer Synchronisations-Schnittstelle (4, 5; 6, 7) aus der Gruppe umfassend Bus-Interface (20), Kommunikations- und Synchronisations-Controller (23, 24), RAM (21, 22), Coding-Decoding-Einheit (25, 26), SERDES-Einheit (27, 28), PHY-Einheit (29, 30) und Transceiver (31, 32) ausgewählt sind.

5. Prozessoreinheit nach Anspruch 4, **dadurch gekennzeichnet, dass** die PHY-Einheit (29, 30) eine LoopBack-Funktion enthält, oder die LoopBack-Funktion neben der PHY-Einheit realisiert ist.

6. Prozessoreinheit nach einem der voranstehenden Ansprüche, **dadurch gekennzeichnet, dass** bestimmte Funktionseinheiten (20 - 31) der zwei Synchronisations-Schnittstellen (4, 5; 6, 7) einer CPU (2, 3) für beide Synchronisations-Schnittstellen (4, 5; 6, 7) nur einmal vorhanden sind.

7. Prozessoreinheit nach einem der voranstehenden Ansprüche, **dadurch gekennzeichnet, dass** bis auf die PHY-Einheiten (29, 30) und die Transceiver (31, 32) alle Funktionseinheiten (20 - 31) der zwei Synchronisations-Schnittstellen (4, 5; 6, 7) einer CPU (2, 3) für beide Synchronisations-Schnittstellen (4, 5; 6, 7) nur einmal vorhanden sind.

8. Prozessoreinheit nach einem der voranstehenden Ansprüche, **dadurch gekennzeichnet, dass** bestimmte Funktionseinheiten (20 - 31) mehrfach in einer Synchronisations-Schnittstelle (4, 5; 6, 7) einer CPU (2, 3) integriert vorhanden sind.

9. Verfahren zum Betreiben einer redundanten Prozessoreinheit (1) nach einem oder mehreren der voranstehenden Ansprüche, bei dem von den beiden CPUs (2, 3) zyklisch überprüft wird, ob eine der beiden Schnittstellenverbindungen (8, 9) ausgefallen ist, und,
a) wenn ein Ausfall einer der beiden Schnittstellenverbindungen (8, 9) festgestellt wird, für eine vorbestimmte Zeitspanne die andere Schnittstellenverbindung (8, 9) überprüft wird,
a1) wenn kein Ausfall der anderen Schnittstellenverbindung (8, 9) festgestellt wird, dann geht vorzugsweise die Reserve-CPU (3) in STOP und die Master-CPU (2) behält weiterhin die Prozessführung,
a2) wenn ein Ausfall auch der anderen Schnittstellenverbindung (8, 9) festgestellt wird, dann übernimmt bzw. behält diejenige CPU (2, 3) als Master die Prozessführung, die keinen Fehler innerhalb ihrer Online testbaren Einheiten ihrer Sync-Schnittstellen feststellen konnte und die andere CPU (2, 3) geht in Stop,
b) wenn kein Ausfall einer der beiden Schnittstellenverbindungen (8, 9) festgestellt wird, dann kann die Master-CPU (2) die beiden intakten Schnittstellenverbindungen (8, 9) zur Erhöhung der Performance beim Aufdaten der Reserve-CPU (3) nutzen, **dadurch gekennzeichnet, dass** die Überprüfung einen Test der Synchronisations-Schnittstelle (4, 5; 6, 7) umfasst, wobei mit einer LoopBack-Funktion in Form einer Umschalteeinheit (1000) getestet wird.

10. Verfahren nach Anspruch 9, **dadurch gekennzeich**n e t, dass im Fall a1) die Reserve-CPU (3) offline geprüft wird.

11. Verfahren nach Anspruch 9, **dadurch gekennzeichnet, dass** im Fall a2) die ehemalige Master-CPU (3) offline geprüft wird.

12. Verfahren nach Anspruch 10 oder 11, **dadurch gekennzeichnet, dass** die offline geprüfte und gegebenenfalls reparierte CPU (2, 3) wieder aufgedatet wird.

13. Verfahren nach einem der Ansprüche 9 - 11, **dadurch gekennzeichnet, dass** im Fall, dass beide Sync-Schnittstellen (6, 7) der Reserve-CPU (3) als intakt geprüft werden, diese CPU (3) wieder aufgedatet wird und als neuer Master die Prozessführung übernimmt, und die ehemalige Master-CPU (2) geht in Stop, um Offline geprüft zu werden.

14. Verfahren nach einem der Ansprüche 9 - 13, **dadurch gekennzeichnet, dass** für den Fall, dass beide Sync-Schnittstellen (4, 5) der ehemaligen Master-CPU (2) als intakt geprüft werden, vorzugsweise diejenige CPU (2, 3) repariert wird, deren Sendeeinheit im Pfad der als defekt diagnostizierten Schnittstellenverbindung liegt.

## Claims

1. Redundant processor unit (1) for a high-availability computing system with a master CPU (2) and a reserve CPU (3), each of which (2, 3) features two synchronisation interfaces (4, 5, 6, 7) consisting of individual functional units, with each synchronisation interface (4, 5) of the master CPU (2) being connected to a synchronisation interface (6, 7) of the reserve CPU (3) and the synchronisation interfaces (4, 5, 6, 7) of one CPU (2, 3) being permanently integrated into this CPU (2, 3), **characterised in that** a synchronisation interface (4, 5; 6, 7) has a test support facility which allows functional units of the synchronisation interface (4, 5, 6, 7) to be tested, with a loopback function being present in the form of a switchover unit (1000).

2. Processor unit according to claim 1, **characterised in that** each CPU (2, 3) contains one or more microprocessors (10, 11; 12, 13) that are connected to all synchronisation interfaces (4, 5; 6, 7) of this CPU (2, 3).

3. Processor unit according to one of the previous claims, **characterised in that** the synchronisation interfaces (4, 5; 6, 7) are outwardly identical.

4. Processor unit according to one of the previous claims, **characterised in that** the functional units of a synchronisation interface (4, 5; 6, 7) are selected from the group comprising bus interface (20), communication and synchronisation controller (23, 24), RAM (21, 22), coding-decoding unit (25, 26), SERDES unit (27, 28), PHY unit (29, 30) and transceivers (31, 32).

5. Processor unit according to claim 4, **characterised in that** the PHY unit (29, 30) contains a loopback function or the loopback function is realised as well as the PHY unit.

6. Processor unit according to one of the previous claims, **characterised in that** specific functional units (20 - 31) of the two synchronisation interfaces (4, 5; 6, 7) of a CPU (2, 3) are only present once for both synchronisation interfaces (4, 5; 6, 7).

7. Processor unit according to one of the previous claims, **characterised in that**, except for the PHY units (29, 30) and the transceivers (31, 32), all functional units (20 - 31) of the two synchronisation interfaces (4, 5; 6, 7) of a CPU (2, 3) are only present once for both synchronisation interfaces (4, 5; 6, 7).

8. Processor unit according to one of the previous claims, **characterised in that** specific functional units (20 - 31) are present integrated a number of times into a synchronisation interface (4, 5; 6, 7) of a CPU (2, 3).

9. Method for operating a redundant processor unit (1) according to one or more of the previous claims, in which the two CPUs (2, 3) check cyclically whether one of the two interface connections (8, 9) has failed, and,
a) If a failure of one of the two interface connections (8, 9) is established, the other interface connection (8, 9) is checked for a predefined period of time,
a1) If no failure of the other interface connection (8, 9) is established, the reserve CPU (3) preferably goes into the Stop state and the master CPU (2) continues to control the process,
a2) If a failure of the other interface connection (8, 9) is established, then that CPU (2, 3) that could not establish any errors within its online testable units of its sync interfaces retains or continues the process control as master and the other CPU (2, 3) goes into the Stop state,
b) if no failure of one of the two interface connections (8, 9) is established, then the master CPU (2) can use the two intact interface connections (8, 9) to increase the performance on updating the reserve CPU (3), **characterised in that** the checking comprises a test of the synchronisation interface (4, 5; 6, 7), whereby testing is conducted with a loopback function in the form of a switchover unit (1000).

10. Method according to claim 9, **characterised in that**, in case a1) the reserve CPU (3) is checked offline.

11. Method according to claim 9, **characterised in that**, in case a2) the former master CPU (3) is checked offline.

12. Method according to claim 10 or 11, **characterised in that** the CPU (2, 3) checked offline and repaired if necessary is updated again.

13. Method according to one of claims 9 - 11, **characterised in that**, in the event of both sync interfaces (6, 7) of the reserve CPU (3) being tested as intact, this CPU (3) is updated again and takes over process control as the new master, and the former master CPU (2) goes into the Stop state in order to be tested offline.

14. Method according to one of claims 9 - 13, **characterised in that**, in the event of both sync interfaces (4, 5) of the former master CPU (2) being tested as intact, that CPU (2, 3) of which the send unit lies in the path of the interface diagnosed as defective is preferably repaired.

## Revendications

1. Unité ( 1 ) de processeur redondante pour un système de calcul très disponible, comprenant un master-CPU ( 2 ) et une réserve-CPU ( 3 ), dont chacun ( 2, 3 ) a deux interfaces ( 4, 5, 6, 7 ) de synchronisation constituées d'unités fonctionnelles individuelles, chaque interface ( 4, 5 ) de synchronisation du master-CPU ( 2 ) étant reliée à une interface ( 6, 7) de synchronisation de la réserve-CPU ( 3 ) et les interfaces ( 4, 5, 6, 7 ) de synchronisation d'une CPU ( 2, 3 ) étant intégrées de manière fixe dans ce CPU ( 2, 3 ), **caractérisée en ce qu'**une interface ( 4, 5, 6, 7 ) de synchronisation a une assistance de test, qui permet de tester les unités fonctionnelles de l'interface ( 4, 5, 6, 7 ) de synchronisation, une fonction loopback étant présente sous la forme d'une unité ( 1000 ) de commutation.

2. Unité de processeur suivant la revendication 1, **caractérisée en ce que** chaque CPU ( 2, 3 ) comporte un ou plusieurs microprocesseur ( 10, 11, 12, 13 ) qui sont reliés à toutes les interfaces ( 4, 5, 6, 7 ) de synchronisation de ce CPU ( 2, 3).

3. Unité de processeur suivant l'une des revendications précédentes, **caractérisée en ce que** les interfaces ( 4, 5, 6, 7 ) de synchronisation sont de même type vers l'extérieur.

4. Unité de processeur suivant l'une des revendications précédentes, **caractérisée en ce que** les unités fonctionnelles d'une interface ( 4, 5, 6, 7 ) de synchronisation sont choisies dans le groupe comprenant une interface ( 20 ) de bus, un dispositif ( 23, 24 ) de commande de communication et de synchronisation, une RAM ( 21, 22 ), une unité ( 25, 26 ) de codage-décodage, une unité ( 27, 28 ) SERDES, une unité ( 29, 30 ) PHY et un émetteur récepteur ( 31, 32 ).

5. Unité de processeur suivant la revendication 4, **caractérisée en ce que** l'unité ( 29, 30 ) PHY comporte une fonction loopback ou la fonction loopback est réalisée à côté de l'unité PHY.

6. Unité de processeur suivant l'une des revendications précédentes, **caractérisée en ce que** certaines unités ( 20 à 31 ) fonctionnelles de deux interfaces ( 4, 5, 6, 7 ) de synchronisation d'un CPU ( 2, 3 ) ne sont présentes qu'une fois pour deux interfaces ( 4, 5, 6, 7 ) de synchronisation.

7. Unité de processeur suivant l'une des revendications précédentes, **caractérisée en ce qu'**à l'exception des unités ( 29, 30 ) PHY et de l'émetteur récepteur ( 31, 32 ), toutes les unités ( 20 à 31 ) fonctionnelles des deux interfaces ( 4, 5, 6, 7 ) de synchronisation d'un CPU ( 2, 3 ) ne sont présentes qu'une fois pour deux interfaces ( 4, 5, 6, 7 ) de synchronisation.

8. Unité de processeur suivant l'une des revendications précédentes, **caractérisée en ce que** certaines unités ( 20 à 31 ) fonctionnelles sont intégrées plusieurs fois dans une interface ( 4, 5, 6, 7 ) de synchronisation d'un CPU ( 2, 3).

9. Procédé pour faire fonctionner une unité ( 1 ) de processeur redondante suivant l'une ou plusieurs des revendications précédentes, dans lequel on contrôle cycliquement par les deux CPU ( 2, 3 ) si l'une des deux liaisons ( 8, 9 ) d'interface est en panne, et
a) lorsque l'on constate une panne de l'une des deux liaisons ( 8, 9 ) d'interface, on contrôle pendant un laps de temps déterminé à l'avance l'autre liaison ( 8, 9 ) d'interface,
a1) si l'on ne constate pas de panne de l'autre liaison ( 8, 9 ) d'interface, la réserve-CPU ( 3 ) passe de préférence en stop et le master-CPU ( 2 ) continue à garder la conduite du processus.
a2) si l'on constate aussi une panne de l'autre liaison ( 8, 9 ) d'interface, prend en charge et garde en tant que maître la conduite du processus, le CPU ( 2, 3 ) qui n'a pas pu constater de défauts dans ses unités pouvant être testées online de ses interfaces sync et l'autre CPU ( 3 ) passe en stop.
b) si l'on ne constate pas de panne de l'une des deux liaisons ( 8, 9 ) d'interface, le master-CPU ( 2 ) peut utiliser les deux liaisons ( 8, 9 ) d'interface intactes pour augmenter les performances lors de la mise à jour de la réserve-CPU ( 3 ), **caractérisé en ce que** le contrôle comprend un test de l'interface ( 4, 5, 6, 7 ) de synchronisation en testant avec une fonction loopback sous la forme d'une unité (1000) de commutation.

10. Procédé suivant la revendication 9, **caractérisé en ce que**, dans le cas a1), on teste la réserve-CPU ( 3 ) offline.

11. Procédé suivant la revendication 9, **caractérisé en ce que**, dans le cas a2) on teste le master-CPU ( 3 ) précédent offline.

12. Procédé suivant la revendication 10 ou 11, **caractérisé en ce que** l'on remet à jour le CPU ( 2, 3 ) testé offline et éventuellement réparé.

13. Procédé suivant l'une des revendications 9 à 11, **caractérisé en ce que** dans le cas dans lequel les deux interfaces ( 6, 7 ) sync de la réserve-CPU ( 3 ) sont testées comme étant intactes, on remet à jour ce CPU ( 3 ) et il prend en charge, en tant que nouveau maître, la conduite du processus et le master-CPU ( 2 ) précédent passe en stop pour être contrôlé offline.

14. Procédé suivant l'une des revendications 9 à 13, **caractérisé en ce que**, dans le cas où les deux interfaces ( 4, 5, 6 ) du master-CPU ( 2 ) précédent sont testées comme étant intactes, on répare de préférence le CPU ( 2, 3 ) dont l'unité d'émission se trouve dans le trajet de la liaison d'interface diagnostiquée comme étant défectueuse.
